# EUROPEAN PATENT APPLICATION

(11) **EP 1 929 864 A1**
(43) Date of publication of application: **11.06.2008**
(21) Application number: 07117181.3
(22) Date of filing: 25.09.2007
(51) Int. Cl.: A01N 25/18, A01P 7/02

(54) **Anti-mite composition**

(30) Priority: 23.11.2006 IT RE20060144
(71) Applicant: RE.LE.VI. S.p.a., 46040 Rodigo (Mantova) (IT)
(72) Inventor: Pagani, Fabio, 46040, Rodigo (Mantova) (IT)
(74) Representative: Corradini, Corrado

(57) **Abstract**

An anti-mite composition comprising transfluthrin in a quantity comprised between 0.1 % and 60% in weight, functioning by evaporation, and being especially in gel, spray, pastille, paper cellulose, moulded plastic and semipermeable membrane form.

## Description

The invention relates to an anti-mite composition.

From among agents causing respiratory allergies, domestic dust mites are a pre-eminent source thereof, especially in the most advanced and industrialised countries. Mites are tiny arachnids (150-400 micron) whose ideal habitat is the home; this is favoured by the fact that the home provides a perfect microclimate temperatures between 20° and 30° with about 70% humidity, with poor ventilation and a minimum air exchange.

In particular, dust mites nest on objects which have a prolonged contact with the human body, which develops heat and humidity at ideal levels for mites, aiding their proliferation.

Clothes and bed-clothes alike constitute favourite nesting-places, and are colonised by mites, where they proliferate and, therefore, where they have a concentrated presence.

With the intent of effectively reducing their proliferation, "barrier systems" are known, and are usually applied on pillows and mattresses. These barrier systems are essentially constituted by bedspreads and pillowslips which prevent passage of the mites from the outside towards the inside, while still ensuring normal transpiration to enable physiological dispersion of humidity from the skin and prevent perspiration.

Though these prior-art systems are rapid and simple to use, they do not enable eradication of all mites. Further, these systems are poorly adapted to any different use other than application to bedclothes.

Today these drawbacks are obviated by using an anti-mite foam dispensed by a spray canister and sprayed directly onto the objects to be treated.

The anti-mite foam contains an anti-mite active ingredient, for example Benzyl benzoate at 2.5%, which kills mites on contact.

In order for the foam to perform its mite-killing function, it has to be sprayed directly onto the clothes and textiles to be treated.

This leads to some drawbacks and disadvantages: for example, it is possible that some textiles might be irredeemably damaged by the composition of the foam which on entering into direct contact with them could easily stain them indelibly.

In substance, mite-killing systems in the prior art work only on contact, and can only be applied on textiles not liable to be damaged by them.

Further, in order to have a continuous effect, the direct spraying operation has to be repeated at regular intervals.

There is therefore a strongly-felt need to have available an anti-mite composition which performs its function essentially by evaporation internally of a confined space, without there being any need for direct contact with the articles to be treated; the composition must also be practically non-toxic for humans, and must release the anti-mite substance constantly for the whole duration of its use and must also have an adequate overall period of usability.

The aim of the present invention is to provide an anti-mite composition having characteristics which satisfy the above-described requirements and which at the same time obviates the drawbacks cited with reference to the prior art.

The aim is attained by an anti-mite composition, as described in claim 1 of the present document.

The dependent claims delineate preferred and particularly advantageous embodiments of the anti-mite composition of the invention.

Further characteristics and advantages of the invention will emerge from a reading of the following description, provided by way of non-limiting example.

In the present invention, the anti-mite composition comprises transfluthrin (CAS 118712-89-3) as main active ingredient, in liquid form and used in a quantity comprised between 0.10% and 60% of the total weight of the composition, preferably in a quantity comprised between 0.10% and 25% of the total weight of the composition.

A perfumed substance can be added, in a quantity comprised between 0.001% and 99.8% in weight and/or a colouring agent in a quantity comprised between 0.001 % and 5% in weight.

In a first embodiment of the present invention, the main ingredient having the anti-mite function, i.e. the transfluthrin, can be placed, together with other components, internally of a container which is closed by a semipermeable membrane which prevents passage of liquid but allows passage of the vapours of the transfluthrin.

The container can be made of plastic and the membrane is preferably covered by a sheet of aluminium, to be removed before use.

In particular, the preparation to be placed in the container comprises transfluthrin in a quantity comprised between 0.1% and 25% in weight, a perfumed substance in a quantity comprised between 0.001% and 99.8% in weight, a colouring substance in a quantity comprised between 0.001% and 5% in weight, and a thickening substance in a quantity comprised between 0.001% and 45%.

The thickening substance can be, for example, silica gel or ethylcellulose.

In a second embodiment of the present invention, the anti-mite device could be an element made of absorbent cellulose paper drenched in transfluthrin in a quantity comprised between 0.1 % and 25% in weight, a perfumed substance in a quantity comprised between 1% and 70% in weight and a colouring agent in a quantity comprised between 0.001% and 2% in weight.

The paper element can be made in any shape, for example it can be spherical or disc-shaped.

In a third embodiment of the present invention, an anti-mite gel can be prepared starting from carrageen as a thickener, in powder form, in a quantity comprised between 1% and 50% in weight, diluted in water in a quantity comprised between 30% and 98.5% in weight, to which are added transfluthrin in a quantity comprised between 0.1 % and 25% in weight, a perfumed substance in a quantity comprised between 0.5% and 12% in weight and a solubilising agent in a quantity comprised between 0.5% and 12% in weight.

As for solubilising agents, C₁₁-C₁₃ alcohols can be used, or ethoxylates.

In a fourth embodiment of the present invention, a moulded plastic anti-mite device can be used, formed from plastic granules, in a quantity comprised between 60% and 98.9% in weight, mixed for about 2 hours with transfluthrin in a quantity comprised between 0.1 % and 25% in weight, and a perfumed substance comprised between 1% and 45% in weight. The moulding stage is then done such as to obtain a plastic which releases perfume and transfluthrin by evaporation.

In a fifth embodiment of the present invention, an anti-mite spray can be prepared, comprising transfluthrin in a quantity comprised between 0.1% and 20% in weight, a perfumed substance in a quantity comprised between 0.01% and 20% in weight and a propellant agent in a quantity comprised between 10% and 99.8% in weight.

Any propellant agent known in the sector can be used.

In a sixth embodiment of the present invention, a solid anti-mite pastille can be prepared, comprising:
- transfluthrin in a quantity comprised between 0.1 % and 25% in weight;
- an inert powder-form substance constituted by an inorganic inert substance selected from among borax, magnesium sulphate and sodium chloride, in a quantity comprised between 25% and 99.5% in weight;
- a plasticising substance aimed at giving plasticity to the composition, in a quantity comprised between 0.1 % and 45% in weight;
- a perfumed substance in a quantity comprised between 0.001% and 15% in weight;
- a colouring agent in a quantity comprised between 0.001 % and 5% in weight.

In particular, the plasticising substance, in powder or scale form, can be any one from among microcellulose, PEG 2000-8000, bentonite, coconut monoethanolamine, stearic amide, talc, stearates and silicas.

The final pastille is obtained by mixing together the active ingredient, liquid transfluthrin, with the inert organic substance in powder form, which has a carrier function, the plasticising substance and the perfume, if included.

This composition is easily reduced by compression to tablets, pastilles, cubes, spheres etc., generally having weights of between 1g and 250g, preferably between 5g and 75g.

The anti-mite action has a duration which varies according to the chosen form of the preparation.

For example, tests have been carried out in which a container with a cellulose disc drenched with 1.3 g of anti-mite composition with 0.3% transfluthrin was placed in a wardrobe of about 1 cubic metre area. Thereafter, and at regular intervals, four rugs infested with about 200 mites belonging to the Dermatophagoïdes pteronyssinus family were introduced into the wardrobe. It was observed that all the mites on the rugs died within 4 hours.

The same disc with 0.3% transfluthrin was left in the wardrobe and each month for a period of three months four "new" rugs infested with about 200 live mites were placed in the wardrobe.

The total elimination of the mites continued to occur within four hours from their introduction into the wardrobe, without there being any need to replace the cellulose disc impregnated with the 0.3% transfluthrin, which was never changed.

Further test were conducted: four rugs (7cm x 7 cm) infested with about 200 live mites belonging to the Dermatophagoïdes pteronyssinus family were treated with a solution of 50ml/m2 of anti-mite (transfluthrin at 0.1%), which was sprayed into the air above the rug surfaces.

Then, each month for a total of three months, the rugs were newly infested with live mites (about 200). It was observed that all the mites placed on the rugs died within four hours, with no need to spray further anti-mite solution into the atmosphere.

As can be appreciated from the above description, the anti-mite composition of the present invention satisfies the requirements and obviates the drawbacks outlined in the introductory part of the present description with reference to the

### prior art.

Further, as transfluthrin is a known moth-killer, a solution as in the present invention can be used both as a mite-killer and as a moth-killer, such as to reduce the number of products to be used to one alone, with a consequent economic saving.

Obviously an expert in the sector, with the aim of satisfying contingent and specific needs, might bring numerous modifications and variants to the anti-mite composition as described herein above, all such modifications falling within the sought ambit of protection, as defined in the following claims.

## Claims

1. An anti-mite composition comprising transfluthrin in a quantity comprised between 0.1% and 60% in weight, the composition performing the anti-mite function by evaporation.

2. The anti-mite composition of claim 1, wherein a quantity of transfluthrin does not exceed 25% in weight.

3. The anti-mite composition of claim 1, further comprising a perfumed substance in a quantity comprised between 0.001 % and 99.8% in weight.

4. The anti-mite composition of claim 1, further comprising a colouring agent in a quantity comprised between 0,001 % and 5% I weight.

5. An anti-mite device with controlled release, comprising a container internally of which an anti-mite preparation is comprised, the anti-mite preparation comprising transfluthrin in a quantity comprised between 0.1% and 25% in weight, a perfumed substance in a quantity comprised between 0.001% and 99.8% in weight, a colouring agent in a quantity comprised between 0.001% and 5% in weight, a thickening substance in a quantity comprised between 0.001% and 45%, the container being closed by a semipermeable membrane which prevents exit of the liquid and which permits passage of vapour released by the preparation.

6. A solid anti-mite pastille, comprising:
- transfluthrin in a quantity comprised between 0.1 % and 25% in weight;
- an inert substance in powder form constituted by an inert inorganic substance selected from among borax, magnesium sulphate and sodium chloride, in a quantity comprised between 25% and 99.5% in weight;
- a plasticising substance aimed at giving plasticity to the composition, in a quantity comprised between 0.1 % and 45% in weight;
- a perfumed substance in a quantity comprised between 0.001% and 15% in weight;
a colouring agent in a quantity comprised between 0.001 % and 5% in weight.

7. The pastille of claim 6, wherein the plasticising substance is selected from among microcellulose, PEG 2000-8000, bentonite, coconut monoethanolamine, stearic amide, talc, stearates and silicas.

8. An anti-mite device with controlled release, comprising an element made of absorbent cellulose paper drenched in transfluthrin in a quantity comprised between 0.1% and 25% in weight, a perfumed substance in a quantity comprised between 1% and 70% in weight and a colouring agent in a quantity comprised between 0.001 % and 2% in weight.

9. An anti-mite spray comprising transfluthrin in a quantity comprised between 0.1% and 20% in weight, a perfumed substance in a quantity comprised between 0.01% and 20% in weight and a propellant agent in a quantity comprised between 10% and 99.8% in weight.

10. An anti-spray get comprising transfluthrin in a quantity comprised between 0.1 % and 25% in weight, thickening carrageen in a quantity comprised between 1% and 50% in weight, a perfumed substance in a quantity comprised between 0.5% and 12% in weight, a solubilising agent in a quantity comprised between 0.5% and 12% in weight, water in a quantity comprised between 30% and 98.5% in weight.

11. A moulded plastic anti-mite device, comprising transfluthrin in a quantity comprised between 0.1 % and 25% in weight, a perfumed substance comprised between 1% and 45% in weight, and a plastic support in a quantity comprised between 60% and 98.5% in weight.

12. Use of transfluthrin as an anti-mite agent.

13. Use of transfluthrin for preparation of an anti-mite preparation.
